Europäisches Patentamt

European Patent Office

Office européen des brevets

(11) Veröffentlichungsnummer: **0 033 875**
A2

(12) **EUROPÄISCHE PATENTANMELDUNG**

(21) Anmeldenummer: **81100485.2**

(22) Anmeldetag: **23.01.81**

(51) Int. Cl.³: **H 01 R 13/02**

(30) Priorität: **08.02.80 DE 3004727**

㊽ Ver.öffentlichungstag der Anmeldung: **19.08.81**
Patentblatt 81/33

(84) Benannte Vertragsstaaten: **AT CH FR GB IT LI SE**

(71) Anmelder: **ERNI Elektroapparate GmbH, Seestrasse 9,
D-7321 Adelberg (Württ.) (DE)**

(72) Erfinder: **Czeschka, Franz, Talstrasse 7,
D-7324 Rechberghausen (DE)**

(74) Vertreter: **Seemann, Norbert W., Brehmstrasse 37,
D-7320 Göppingen (DE)**

(54) **Elektrischer Steckverbinder.**

㉗ Bei elektrischen Steckverbindern zur Schaffung gut leitender, dauerhafter Übergänge zwischen interner und äußerer Verdrahtung an sogenannten Baugruppenträgern od. dgl. ist vorgesehen, anstelle der bislang üblichen, kostspieligen Vergoldung der Kontaktteile, die Kombination eines unedlen Metallüberzugs hoher Leitfähigkeit mit einem guthaftenden Kontaktöl und einer scharfkantigen Kontaktkuppenausbildung anzuwenden.

## Elektrische Steckverbindung

Die Erfindung bezieht sich auf eine elektrische Steckverbindung zur Schaffung leitender Übergänge zwischen interner und äußerer Verdrahtung an Baugruppenträgern o.dgl.

Derartige Steckverbindungen sind gemäß dem Oberbegriff des Hauptanspruches unter anderem aus der DE-AS 12 17 476 sowie der GB-PS 11 03 956 bekannt und bestehen beispielsweise aus einer ein- oder mehrreihigen Anordnung von in einem leistenförmigen Isoliergehäuse im Buchsenbereich umschlossenen, metallischen Kontaktfedern, mit freiliegenden, rechteckigen Wickelpfosten, wobei die Kontaktfedern eine Kontakttulpe mit gegeneinander gerichteten Kontaktkuppen aufweisen, wobei sämtliche Kontaktteile in bislang meistens üblicher Weise, zwecks guten elektrischen Übergangs, mit einem galvanisch o.ä. aufgebrachten Goldüberzug versehen waren.

Eine derartige Oberflächenbehandlung ist aber allein vom Material her schon relativ kostenaufwendig und die ständige Verknappung bzw. Verteuerung auf dem Edelmetallmarkt führte daher zu der Aufgabe vorliegender Erfindung, nämlich ohne Verwendung von Gold o.ä. teuren Materialien, mit unedlen Metallen oder Metallegierungen gleich gute, d.h. konstante und dauerhafte Kontaktverhältnisse wie bei Vergoldung zu schaffen.

Gelöst wird diese Aufgabe durch das kombinatorische Zusammenwirken der in den Patentansprüchen genannten Mittel und Maßnahmen.

Zwar ist dabei das kennzeichnende Merkmal a) des Hauptanspruchs
für sich durch die GB-PS 12 61 012 ebenso druckschriftlich vorbekannt,
wie das Merkmal c) teilweise aufgrund der US-PS 40 45 868 und das Merkmal b) im allgemeinen, jedoch ergibt das Zusammenwirken unedler Metalle oder entsprechender Legierungen in Verbindung mit gut haftendem
Kontaktöl und der scharfkantigen Ausbildung der Kontaktkuppen der
freien Federschenkel als kombinatorischen Gesamteffekt ein besonders günstiges Kontaktergebnis, insbesondere hinsichtlich gleichmäßigem Kontaktwiderstand und ebenso langer Lebensdauer, wie es bisher nur mit edlen Metallen möglich war.

Die Erfindung ist in der Zeichnung am Beispiel einer baulich bekannten Anschlußleiste dargestellt.

Es zeigen:

    Fig. 1    die Teilansicht eines üblichen Steckverbinders,

    Fig. 2    eine Kontaktfeder als Einzelheit in vergrößertem
            Maßstab und

    Fig. 3    als Seitenansicht zu Fig. 2 die erfindungsgemäße
            Ausbildung der Kontakttulpe.

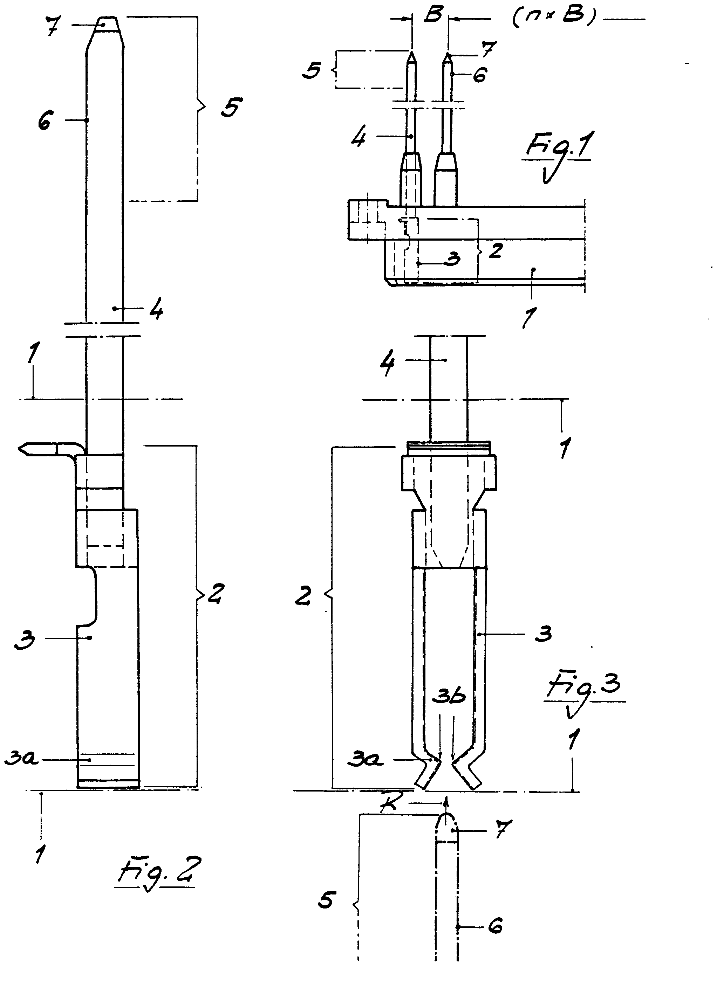

In Fig. 1 und 2 ist der Teil einer üblichen Normfederleiste und
Kontaktfeder dargestellt, die in ihrem Grundaufbau dabei im wesentlichen aus dem leistenförmigen Isoliergehäuse 1, das den Buchsenbereich 2 der aus Buchse 3 und Wickelpfosten 4 gebildeten Federn umschließt, wobei diese Federn in mindestens einer, üblicherweise jedoch zwei oder mehr parallelen Reihen mit gegenseitigem Abstand "B" zueinander angeordnet sind. Das den Kontaktbereich bildende Messerteil 5 jedes Wickelpfostens 4 ist dabei mit Position 6' und Einführspitze 7 angedeutet.

Gemäß der vorliegenden Erfindung sind nun einerseits vorzugsweise sämtliche metallischen Bereiche bzw. Flächen 2 bis 7 mit einer Sn/Pb Legierung von etwa 60:40, oder einer anderen aus Nichtedelmetallen mit ähnlichen Eigenschaften, überzogen und mit einem handelsüblichen Kontaktöl bzw. entsprechenden Kontaktpflegemittel benetzt; zusätzlich weisen die freien Schenkel der Kontakttulpe 3a noch gegeneinandergerichtete, scharfwinklige und ggf. mit kleinen Radien versehene Abkantungen zwecks Schaffung einer Linienberührung von möglichst hoher Flächenpressung bei Kontakt mit den strichpunktiert in Fig. 3 angedeuteten Gegenstiften 5, 6, 7 auf. Beidseits der Abkantungen bzw. Kontaktkuppen 3b haben die freien Schenkel 3a vorzugsweise noch einen geradlinigen Verlauf.

Patentansprüche:

1. Elektrische Steckverbindung zur Schaffung leitender Übergänge zwischen interner und äußerer Verdrahtung an Baugruppenträgern o.dgl. bestehend beispielsweise aus einer ein- oder mehrreihigen Anordnung von in einem leistenförmigen Isoliergehäuse im Buchsenbereich umschlossenen, metallischen Kontaktfedern, mit freiliegenden, rechteckigen Wickelpfosten, wobei die Kontaktfedern eine Kontakttulpe mit gegeneinander gerichteten Kontaktkuppen aufweisen, gekennzeichnet durch das kombinatorische Zusammenwirken folgender Mittel und Maßnahmen:

   a) Die Kontaktfedern ( 2 bis 7 ) sind mit einem unedlen Metall bzw. einer entsprechenden Metallegierung hoher Leitfähigkeit überzogen.

   b) Die eigentlichen Kontaktflächen ( 3, 3a bzw. 5, 6, 7 ) sind mit einem guthaftenden Kontaktöl oder ähnlichem Kontaktpflegemittel benetzt.

   c) Die freien Schenkel ( 3a ) der Kontaktfeder weisen scharfkantige, gegeneinander gerichtete Kontaktkuppen ( 3b ) auf.

2. Elektrische Steckverbindung nach Anspruch 1, dadurch gekennzeichnet, daß als leitender Metallüberzug eine Zinn-Bleilegierung im Verhältnis von etwa 60:40 dient.

3. Kontaktfeder für elektrische Steckverbindungen nach den
   Ansprüchen 1 und 2, gekennzeichnet durch annähernd geradlinigen Verlauf der freien Schenkel ( 3a ), der Kontakttulpe beidseits der
   Abkantlinien ( 3b ).

0033875

1/1

Fig.1

Fig.2

Fig.3